(19) Europäisches Patentamt
European Patent Office
Office européen des brevets

(11) **EP 4 254 548 A1**

(12) **EUROPEAN PATENT APPLICATION**
published in accordance with Art. 153(4) EPC

(43) Date of publication:
**04.10.2023 Bulletin 2023/40**

(21) Application number: **20967329.2**

(22) Date of filing: **28.12.2020**

(51) International Patent Classification (IPC):
***H01M 4/134*** *(2010.01)*

(52) Cooperative Patent Classification (CPC):
Y02E 60/10

(86) International application number:
**PCT/CN2020/140374**

(87) International publication number:
**WO 2022/140978 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **LIAO, Qunchao
Ningde, Fujian 352100 (CN)**

(74) Representative: **Klunker IP
Patentanwälte PartG mbB
Destouchesstraße 68
80796 München (DE)**

(54) **NEGATIVE ELECTRODE PLATE, ELECTROCHEMICAL DEVICE COMPRISING NEGATIVE ELECTRODE PLATE, AND ELECTRONIC DEVICE**

(57) This application provides a negative electrode plate, an electrochemical device containing same, and an electronic device. A negative electrode material layer of the negative electrode plate includes a silicon-based particle and a graphite particle. In a silicon-based particle of a diameter larger than 3 $\mu$m, a Si content in a superficial region is lower than a Si content in an inner region. In this way, a surface stress of the negative electrode plate is reduced, thereby improving stability of an interface between a silicon-based particle and an electrolytic solution, and in turn, effectively improving the cycle performance of the electrochemical device and alleviating the problem of expansion and deformation.

FIG. 1

**Description**

**TECHNICAL FIELD**

This application relates to the electrochemical field, and in particular, to a negative electrode plate, an electrochemical device containing same, and an electronic device.

**BACKGROUND**

By virtue of a high energy storage density, a high open circuit voltage, a low self-discharge rate, a long cycle life, high safety, and other advantages, lithium-ion secondary batteries are widely applied in various fields such as electrical energy storage, mobile electronic devices, electric vehicles, and aerospace equipment. As the mobile electronic devices and the electric vehicles come to a stage of rapid development, higher requirements are imposed on the energy density, safety, cycle performance, lifespan and other performance of the lithium-ion secondary batteries in the market.

With a theoretical capacity of up to 4200 mAh/g, a silicon-based material is currently known as a negative electrode material with the highest theoretical capacity. In addition, silicon is abundant in reserves and low in price. Therefore, the silicon-based material is typically used as a next-generation high-gram-capacity negative electrode material in a negative electrode plate in a lithium-ion secondary battery currently. However, the volume change rate of the silicon-based material is as high as 300% or more in a process of deintercalating lithium. The volume change is prone to cause stress concentration on the surface of the silicon-based material and impair stability of an interface between a silicon-based particle and an electrolytic solution, thereby deteriorating the cycle performance of the lithium-ion secondary battery.

**SUMMARY**

An objective of this application is to provide a negative electrode plate, an electrochemical device containing same, and an electronic device to improve the cycle performance of the electrochemical device and alleviate the problem of expansion and deformation.

It is hereby noted that in the following description, this application is construed by using a lithium-ion battery as an example of the electrochemical device, but the electrochemical device according to this application is not limited to the lithium-ion battery.

Specific technical solutions are as follows:

A first aspect of this application provides a negative electrode plate. The negative electrode plate includes a negative electrode material layer. The negative electrode material layer includes a silicon-based particle and a graphite particle. The silicon-based particle includes silicon and carbon. In a silicon-based particle of a diameter larger than 3 $\mu$m, a Si content in a superficial region is lower than a Si content in an inner region.

In an embodiment of this application, the negative electrode material layer includes a silicon-based particle and a graphite particle. The silicon-based particle may include silicon and carbon. The silicon-based particle may further include oxygen, nitrogen, phosphorus, sulfur, and the like. The type of the silicon-based particle is not particularly limited in this application, as long as the objectives of this application can be achieved. For example, the silicon-based particle may include at least one of nano-silicon, silicon nanoparticles, silicon-carbon compound, nano-silicon oxide, or silicon-metal alloy. The silicon-based particle and the graphite particle included in the negative electrode material layer can maintain a high gram capacity of the negative electrode material layer while reducing the contact between the negative electrode material layer and the electrolytic solution and reducing the generation of solid electrolyte interface (SEI) films.

In this application, "superficial region" of a silicon-based particle means a shell part region close to an outer surface of the silicon-based particle and extending from the outer surface to the center of the silicon-based particle; and "inner region" means a spherical part region away from the outer surface of the silicon-based particle and extending from the outer surface to the center of the silicon-based particle. A person skilled in the art may select the size of each different region according to actual needs.

In this application, in the silicon-based particle of a diameter larger than 3 $\mu$m, the Si content in the superficial region is lower than the Si content in the inner region, thereby reducing expansion and deformation, and in turn, effectively reducing the surface stress concentration caused by the volume expansion arising from silicon lithiation, and improving stability of the interface between the silicon-based particle and the electrolytic solution. It is hereby noted that, for the silicon-based particle of a diameter smaller than 3 $\mu$m, the distribution of the Si content is not particularly limited as long as the objectives of this application can be achieved.

Overall, the negative electrode plate according to this application includes a negative electrode material layer. The negative electrode material layer includes a silicon-based particle and a graphite particle. In the silicon-based particle of a diameter larger than 3 $\mu$m, the Si content in the superficial region is lower than the Si content in the inner region.

In this way, the surface stress concentration caused by the volume expansion arising from silicon lithiation in the negative electrode plate is reduced, thereby improving the stability of the interface between the silicon-based particle and the electrolytic solution, and in turn, effectively improving the cycle performance of the lithium-ion battery and alleviating the problem of expansion and deformation.

In an embodiment of this application, in a superficial region extending a distance from an outer surface of the silicon-based particle to a point that is less than 0.2 $\mu$m distant from the outer surface, a mass percent of Si is $M_1$; in an inner region that is more than 0.2 $\mu$m distant from the outer surface of the silicon-based particle, the mass percent of Si is $M_2$; and $M_2$ is greater than $M_1$. When the superficial region is deficient, the expansion-induced stress cannot be effectively released, thereby being prone to generate cracks on the surface of the silicon-based particle during cycling. The electrolytic solution corrodes the interior of the silicon-based particle along the cracks, thereby disrupting the structure of the silicon-based particle, consuming lithium ions in the lithium-ion battery, and accelerating the fading of the capacity. When the superficial region is excessive, the overall silicon content of the silicon-based particle is low, the gram capacity is reduced accordingly, and the energy density of the lithium-ion battery is reduced. By controlling the superficial region to be a region extending a distance from the outer surface of the silicon-based particle to a point that is less than 0.2 $\mu$m distant from the outer surface, the expansion-induced surface stress concentration in the negative electrode plate can be effectively alleviated, thereby improving the cycle performance of the lithium-ion battery and alleviating the problem of expansion and deformation.

In this application, the term "distance" in the phrase "a distance from the outer surface of the silicon-based particle to a point distant from the outer surface" and the phrase "distance from the outer surface of the silicon-based particle" mean a maximum distance between two points on a vertical line perpendicular to a tangent to the outer surface, where one point is on the rim of the inner region, and the other point is on the outer surface. In the above embodiment, the "distance" is 0.2 $\mu$m. It is hereby noted that the "distance" is not particularly limited in this application as long as the objectives of this application can be achieved. For example, the distance may be 0.04 $\mu$m, 0.08 $\mu$m, 0.15 $\mu$m, or the like.

In an embodiment of this application, a sum $\alpha$ of a porosity $\alpha_1$ of the silicon-based particle and a porosity $\alpha_2$ of the negative electrode plate satisfies: 40% < $\alpha$ < 90%. For example, a lower limit of the sum $\alpha$ of the porosity $\alpha_1$ of the silicon-based particle and the porosity $\alpha_2$ of the negative electrode plate may be, but not limited to, 42%, 45%, 46%, 48%, 55%, 57%, or 60%; and an upper limit of the sum $\alpha$ of the porosity $\alpha_1$ of the silicon-based particle and the porosity $\alpha_2$ of the negative electrode plate may be, but not limited to, 65%, 68%, 72%, 77%, 86%, or 87%. When the sum $\alpha$ of the porosity $\alpha_2$ of the negative electrode plate and the porosity $\alpha_1$ of the silicon-based particle is controlled to fall within the above range, the cycle performance and the anti-expansion performance of the lithium-ion battery are enhanced significantly.

In this application, the "porosity $\alpha_1$ of the silicon-based particle" means a percentage of the volume of pores in the silicon-based particle in the total volume of the silicon-based particle. In this application, the "porosity $\alpha_2$ of the negative electrode plate" means a percentage of the volume of pores between various particles in the negative electrode plate based on the total volume of the negative electrode plate.

In this application, a pore in the silicon-based particle and a pores in the negative electrode plate each independently include a micropore with a diameter smaller than 2 nm, a mesopore with a diameter ranging from 2 nm to 50 nm, or a macropore with a diameter larger than 50 nm. In this application, the number of the micropores, mesopores, and macropores is not particularly limited, as long as the objectives of this application can be achieved.

In an embodiment of this application, the porosity $\alpha_1$ of the silicon-based particle is 15% to 60%. For example, a lower limit of the porosity $\alpha_1$ of the silicon-based particle may be, but not limited to, 15%, 16%, 18%, 25%, 30%, or 33%; and an upper limit of the porosity $\alpha_1$ of the silicon-based particle may be, but not limited to, 38%, 45%, 47%, 56%, or 60%. When the porosity $\alpha_1$ of the silicon-based particle is less than 15%, the reserved space is not enough to cushion the volume expansion caused by lithiation of nano-silicon, and the mechanical strength of the carbonaceous material can hardly withstand the huge expansion stress, thereby disrupting the structure of the silicon-based particle and deteriorating the electrochemical performance of the lithium-ion battery. When the porosity $\alpha_1$ of the silicon-based particle is greater than 60%, the pores are oversized, and the compressive strength of the carbonaceous material decreases, thereby making the silicon-based particle prone to break during processing, and deteriorating the electrochemical performance of the lithium-ion battery.

In this application, the porosity $\alpha_2$ of the negative electrode plate is 15% to 42%. For example, a lower limit of the porosity $\alpha_2$ of the negative electrode plate may be, but not limited to, 15%, 18%, or 27%; and an upper limit of the porosity $\alpha_2$ of the negative electrode plate may be, but not limited to, 30%, 35%, or 42%. When the porosity $\alpha_2$ of the negative electrode plate is less than 15%, the negative electrode plate can hardly be sufficiently infiltrated by the electrolytic solution, the transmission distance of lithium ions will be increased, and the kinetics of the lithium-ion battery will deteriorate. When the porosity $\alpha_2$ of the negative electrode plate is greater than 42%, the contact between a silicon-based particle and a graphite particle is prone to fail during cycling of the lithium-ion battery, thereby deteriorating the cycle performance and reducing the energy density of the lithium-ion battery.

In an embodiment of this application, the porosity $\alpha_1$ of the silicon-based particle and a silicon content B in the silicon-based particle satisfy: $P = 0.5\alpha_1/(B - \alpha_1 B)$, $0.2 \leq P \leq 1.6$. For example, a lower limit of the P value may be, but not limited to, 0.2, 0.4, 0.5, or 0.8; and an upper limit of the P value may be, but not limited to, 1.1, 1.5, or 1.6. When the P value is less than 0.2, the reserved pores in the silicon-based particle are not enough to cushion the volume expansion caused by lithiation of nano-silicon, and the mechanical strength of the carbonaceous material can hardly withstand the huge expansion stress, thereby disrupting the structure of the silicon-based particle and deteriorating the electrochemical performance of the lithium-ion battery. When the P value is greater than 1.6, the reserved pores in the silicon-based particle are oversized, thereby deteriorating the mechanical compressive strength of the carbonaceous material, making the silicon-based particle prone to break during processing, exposing plenty of fresh interfaces, deteriorating the first-cycle Coulombic efficiency and cycle performance of the lithium-ion battery, and reducing the energy density of the lithium-ion battery. Therefore, controlling the P value to fall within the foregoing range can effectively improve the energy density, cycle performance, and anti-expansion performance of the lithium-ion battery.

The silicon content B in the silicon-based particle is 20 wt% to 60 wt%. For example, a lower limit of the silicon content B may be, but not limited to: 20 wt% or 35wt%; an upper limit of the silicon content B may be, but not limited to: 40 wt% or 60 wt%. When the silicon content B is less than 20 wt%, the gram capacity of the negative electrode material layer is low. When the silicon content B is higher than 60 wt%, the volume change of the silicon-based particle is accelerated during lithium deintercalation, and more SEI films are generated, thereby accelerating the consumption of lithium ions and electrolytic solution in the lithium-ion battery and increasing the impedance of the lithium-ion battery significantly.

In an embodiment of this application, a content of the silicon-based particle in the negative electrode material layer is 3 wt% to 80 wt%. For example, a lower limit of the content of the silicon-based particle in the negative electrode material layer may be, but not limited to, 3 wt%, 10 wt%, 20 wt%, 25 wt%, 30 wt%, 35 wt%, or 40 wt%; and an upper limit of the content of the silicon-based particle in the negative electrode material layer may be, but not limited to: 45 wt %, 55 wt %, 60 wt %, 70 wt %, or 80 wt %. By controlling the content of the silicon-based particle in the negative electrode material layer to fall within the above range, this application maintains a high gram capacity of the negative electrode material layer, thereby increasing the energy density of the lithium-ion battery.

In this application, the content of the graphite particle in the negative electrode material layer is not particularly limited, as long as the objectives of this application can be achieved. For example, the content of the graphite particle in the negative electrode material layer may be 20 wt% to 97 wt%. A lower limit of the content of the graphite particle in the negative electrode material layer may be, but not limited to: 20 wt%, 25 wt%, 30 wt% or 40 wt%; and an upper limit of the content of the graphite particle in the negative electrode material layer may be, but not limited to: 50 wt%, 60 wt%, 70 wt% %, 80 wt%, or 90 wt%. By controlling the content of graphite particle in the negative electrode material layer to fall within the above range, this application increase the conductivity of the negative electrode material layer, reduces the contact between the negative electrode material layer and the electrolytic solution, and reduces the SEI films.

In an embodiment of this application, a peak intensity ratio between a D peak and a G peak in a Raman test of the silicon-based particle is 0.2 to 2. The D peak is a peak with a shift range of 1255 cm$^{-1}$ to 1355 cm$^{-1}$ in a Raman spectrum of the silicon-based particle, and the G peak is a peak with a shift range of 1575 cm$^{-1}$ to 1600 cm$^{-1}$ in the Raman spectrum of the silicon-based particle. When the peak intensity ratio between the D peak and the G peak in a Raman test of the silicon-based particle is controlled to fall within the above range, the carbonaceous material of the silicon-based particle contains sufficient pore defects, thereby suppressing the expansion and deformation of the silicon-based material during cycling, and in turn, improving the anti-expansion performance and cycle performance of the negative electrode plate.

In an embodiment of this application, a carbon material exists on a surface of the silicon-based particle. The type of the carbon material is not particularly limited in this application, as long as the objectives of this application can be achieved. For example, the carbon material may include at least one of amorphous carbon, carbon nanotubes, carbon nanoparticles, vapor grown carbon fibers, graphene, or the like. In some embodiments of this application, the carbon nanotubes may include at least one of single-walled carbon nanotubes or multi-walled carbon nanotubes. The method for preparing the carbon material existent on the surface of the silicon-based particle is not particularly limited in this application, as long as the objectives of this application can be achieved. In this application, the content of the carbon material is not particularly limited, as long as the objectives of this application can be achieved. For example, the content of the carbon material may be 0.01 wt% to 1 wt% based on the total mass of the silicon-based particle, and optionally, may be 0.01 wt%, 0.1 wt%, 0.5 wt%, or 1 wt%. The carbon material on the surface of the silicon-based particle improves the stability of the interface on the surface of the silicon-based particle, restrains the silicon-based particle from shifting, effectively alleviates the structural disruption caused by the volume expansion or contraction of the silicon-based particle, avoids generation of fresh interfaces, and in turn, improves the cycle performance and alleviates the expansion and deformation of the negative electrode plate.

In an embodiment of this application, a polymer material exists on the surface of the silicon-based particle. The type of the polymer material is not particularly limited in this application, as long as the objectives of this application can be achieved. For example, the polymer material may include at least one of polyvinylidene difluoride (PVDF), carboxymethylcellulose (CMC), sodium carboxymethylcellulose (CMC-Na), polyvinylpyrrolidone (PVP), polyacrylic acid, polystyrene-butadiene rubber, or a derivative thereof. In some embodiments of this application, the polymer material may include sodium carboxymethylcellulose, polyvinylpyrrolidone, polyvinylidene fluoride, and polyacrylic acid sodium (PAANa). The method for preparing the polymer material existent on the surface of the silicon-based particle is not particularly limited in this application, as long as the objectives of this application can be achieved. In this application, the content of the polymer material is not particularly limited, as long as the objectives of this application can be achieved. For example, the content of the polymer material may be 0 wt% to 0.4 wt% based on the total mass of the silicon-based particle, and optionally, may be 0 wt%, 0.025 wt%, 0.15 wt%, or 0.4 wt%.

In an embodiment of this application, an average particle diameter $Dv_{50}$ of the silicon-based particle is less than 20 $\mu$m. Without being limited to any theory, when the average particle diameter $Dv_{50}$ of the silicon-based particles is greater than 20 $\mu$m, problems such as scratches are prone to occur during processing of the negative electrode plate, and the contact sites between the particles are reduced, thereby impairing the cycle performance of the negative electrode plate. By controlling the average particle diameter $Dv_{50}$ of the silicon-based particles according to this application to fall within the above range, the cycle performance of the negative electrode plate can be improved. The particle diameter of the graphite particles is not particularly limited in this application, as long as the objectives of this application can be achieved.

In an embodiment of this application, a specific surface area of the silicon-based particle is less than 50 $m^2/g$. Without being limited to any theory, when the specific surface area of the silicon-based particle is greater than 50 $m^2/g$, the specific surface area of the silicon-based particle is excessive, and side reactions will impair the performance of the lithium-ion battery. In addition, the binder will be consumed at a higher percentage, the binding force between the negative electrode material layer and the negative current collector will decrease, and the growth rate of the internal resistance will be relatively high. The specific surface area of the graphite particle is not particularly limited in this application, as long as the objectives of this application can be achieved.

In this application, a compacted density of the negative electrode plate is 1.0 $g/cm^3$ to 1.9 $g/cm^3$, so that the energy density of the lithium-ion battery is high.

The negative current collector included in the negative electrode plate is not particularly limited in this application, as long as the objectives of this application can be achieved. For example, the negative current collector may include a copper foil, a copper alloy foil, a nickel foil, a stainless steel foil, a titanium foil, foamed nickel, foamed copper, a composite current collector, or the like. The thicknesses of the negative current collector and the negative electrode material layer are not particularly limited in this application, as long as the objectives of this application can be achieved. For example, the thickness of the negative current collector is 6 $\mu$m to 10 $\mu$m, and the thickness of the negative electrode material layer is 30 $\mu$m to 120 $\mu$m. The thickness of the negative electrode plate is not particularly limited in this application, as long as the objectives of this application can be achieved. For example, the thickness of the negative electrode plate is 50 $\mu$m to 150 $\mu$m.

Optionally, the negative electrode plate may further include a conductive layer. The conductive layer is located between the negative current collector and the negative electrode material layer. The composition of the conductive layer is not particularly limited, and may be a conductive layer commonly used in the art. The conductive layer includes a conductive agent and an binder.

The positive electrode plate is not particularly limited in this application, as long as the objectives of this application can be achieved. For example, the positive electrode plate generally includes a positive current collector and a positive electrode material layer. The positive current collector is not particularly limited in this application, as long as the objectives of this application can be achieved. For example, the positive current collector may include an aluminum foil, an aluminum alloy foil, a composite current collector, or the like. The positive electrode material layer includes a positive active material. The positive active material is not particularly limited as long as the objectives of this application can be achieved. For example, the positive active material may include at least one of lithium nickel cobalt manganese oxide (811, 622, 523, 111), lithium nickel cobalt aluminum oxide, lithium iron phosphate, a lithium-rich manganese-based material, lithium cobalt oxide, lithium manganese oxide, lithium manganese iron phosphate, or lithium titanium oxide. The thicknesses of the positive current collector and the positive electrode material layer are not particularly limited in this application, as long as the objectives of this application can be achieved. For example, the thickness of the positive current collector is 8 $\mu$m to 12 $\mu$m, and the thickness of the positive electrode material layer is 30 $\mu$m to 120 $\mu$m.

Optionally, the positive electrode plate may further include a conductive layer. The conductive layer is located between the positive current collector and the positive electrode material layer. The composition of the conductive layer is not particularly limited, and may be a conductive layer commonly used in the art. The conductive layer includes a conductive agent and an binder.

The conductive agent is not particularly limited as long as the objectives of this application can be achieved. For example, the conductive agent may include at least one of conductive carbon black (Super P), carbon nanotubes (CNTs), carbon fibers, flake graphite, Ketjen black, or graphene, or the like. The binder is not particularly limited, and may be any binder well known in the art, as long as the objectives of this application can be achieved. For example, the binder may include at least one of polypropylene alcohol, sodium polyacrylate, potassium polyacrylate, lithium polyacrylate, polyimide, polyamide imide, styrene butadiene rubber (SBR), polyvinyl alcohol (PVA), polyvinylidene difluoride, polytetrafluoroethylene (PTFE), carboxymethyl cellulose, or sodium carboxymethyl cellulose (CMC-Na), or the like. For example, the binder may be styrene butadiene rubber (SBR).

The separator in this application is not particularly limited as long as the objectives of this application can be achieved. For example, the separator may be at least one of: a polyethylene (PE)- and polypropylene (PP)-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film.

For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound.

For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be one or more selected from polyvinylidene fluoride, vinylidene fluoride-hexafluoropropylene copolymer, polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene difluoride, poly(vinylidene difluoride-hexafluoropropylene), or the like. The lithium-ion battery according to this application further includes an electrolyte. The electrolyte may be one or more of a gel electrolyte, a solid-state electrolyte, and an electrolytic solution. The electrolytic solution includes a lithium salt and a nonaqueous solvent.

In some embodiments of this application, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, the lithium salt is $LiPF_6$ because it provides a high ionic conductivity and improves cycle properties.

The nonaqueous solvent may be a carbonate compound, a carboxylate compound, an ether compound, another organic solvent, or any combination thereof. The carbonate compound may be a chain carbonate compound, a cyclic carbonate compound, a fluorocarbonate compound, or any combination thereof. Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof. Examples of the carboxylate compound are methyl formate, methyl acetate, ethyl acetate, n-propyl acetate, tert-butyl acetate, methyl propionate, ethyl propionate, propyl propionate, $\gamma$-butyrolactone, decanolactone, valerolactone, mevalonolactone, caprolactone, or any combination thereof. Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof. Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester and any combination thereof.

This application further provides an electrochemical device. The electrochemical device includes a negative electrode plate. The negative electrode plate is the negative electrode plate disclosed in any one of the embodiments described above. The cycle performance, anti-expansion performance, rate performance, and volumetric energy density of the electrochemical device are high.

The electrochemical device in this application is not particularly limited, and may be any device in which an electrochemical reaction occurs. In some embodiments, the electrochemical device may include, but not limited to, a lithium metal secondary battery, a lithium-ion secondary battery (lithium-ion battery), a lithium polymer secondary battery, a lithium-ion polymer secondary battery, or the like.

This application further provides an electronic device. The electronic device includes the electrochemical device according to an embodiment of this application. The cycle performance, anti-expansion performance, rate performance, and volumetric energy density of the electronic device are high.

The electronic device according to this application is not particularly limited, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

The preparation process of the electrochemical device is well known to a person skilled in the art, and is not particularly limited in this application. For example, a process of manufacturing the electrochemical device may include: stacking a positive electrode plate and a negative electrode plate that are separated by a separator, performing operations, such as winding and folding as required, on the stacked structure, placing the structure into a housing, injecting an electrolytic solution into the housing, and sealing the housing, where the separator in use is the separator provided in this application. In addition, an overcurrent prevention element, a guide plate, and the like may be placed into the housing as required, so as to prevent the rise of internal pressure, overcharge, and overdischarge of the electrochemical device.

This application provides a negative electrode plate, an electrochemical device containing same, and an electronic device. A negative electrode material layer of the negative electrode plate includes a silicon-based particle and a graphite particle. In a silicon-based particle of a diameter larger than 3 $\mu$m, a Si content in a superficial region is lower than a Si content in an inner region. In this way, a surface stress of the negative electrode plate is reduced, thereby improving stability of an interface between a silicon-based particle and an electrolytic solution, and in turn, effectively improving the cycle performance of the electrochemical device and alleviating the problem of expansion and deformation.

BRIEF DESCRIPTION OF DRAWINGS

To describe the technical solutions in this application or the prior art more clearly, the following outlines the drawings to be used in the embodiments of this application or the prior art. Evidently, the drawings outlined below are merely a part of embodiments of this application.

FIG. 1 is a cross-sectional view of a silicon-based particle according to an embodiment of this application;
FIG. 2 is a scanning electron microscope (SEM) image of a cross-section of a silicon-based particle according to an embodiment of this application;
FIG. 3 is an energy dispersive X-ray spectroscopy (EDS) line scan diagram for a position indicated by the arrow shown in FIG. 2;
FIG. 4 is a SEM image of a cross-section of a negative electrode plate according to an embodiment of this application;
FIG. 5 is a magnified SEM image of FIG. 4;
FIG. 6 shows a capacity attenuation curve during cycling according to Embodiment 2 and Comparative Embodiment 1 of this application; and
FIG. 7 shows an expansion curve of a lithium-ion battery according to Embodiment 2 and Comparative Embodiment 1 of this application.

List of reference numerals: 10. pore in a silicon-based particle; 20. pore in a negative electrode plate; 30. superficial region; 40. inner region; 50. particle interface.

DETAILED DESCRIPTION OF EMBODIMENTS

To make the objectives, technical solutions, and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

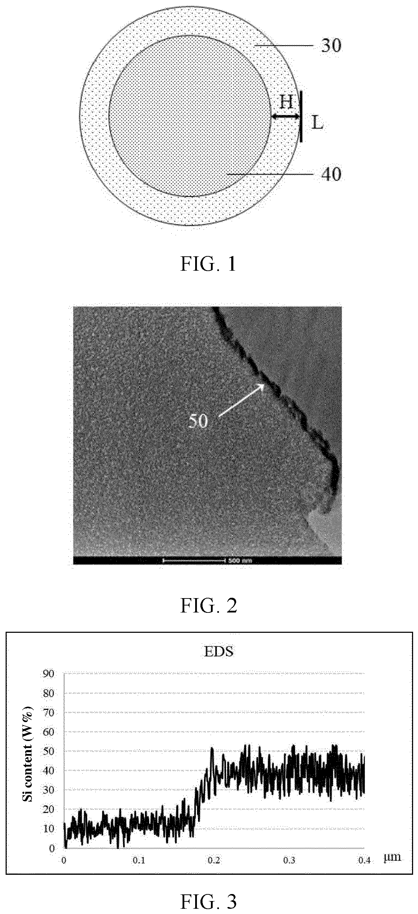

FIG. 1 is a cross-sectional view of a silicon-based particle according to an embodiment of this application. Referring to FIG. 1, in a silicon-based particle, in a superficial region 30 extending a distance from an outer surface of the silicon-based particle to a point that is less than H distant from the outer surface, a mass percent of Si is $M_1$; in an inner region 40 that is more than H distant from the outer surface of the silicon-based particle, the mass percent of Si is $M_2$; and $M_2$ is greater than $M_1$. In FIG. 1, L is a tangent to the outer surface of the silicon-based particle.

FIG. 2 is a SEM image of a cross-section of a silicon-based particle according to an embodiment of this application. FIG. 3 is an EDS line scan diagram of a particle interface 50 at a position indicated by the arrow shown in FIG. 2. Referring to FIG. 3, in a silicon-based particle, the Si content in a region extending a distance from an outer surface of the silicon-based particle to a point that is less than 0.2 $\mu$m distant from the outer surface is less than the Si content in a region that is more than 0.2 $\mu$m distant from the outer surface of the silicon-based particle.

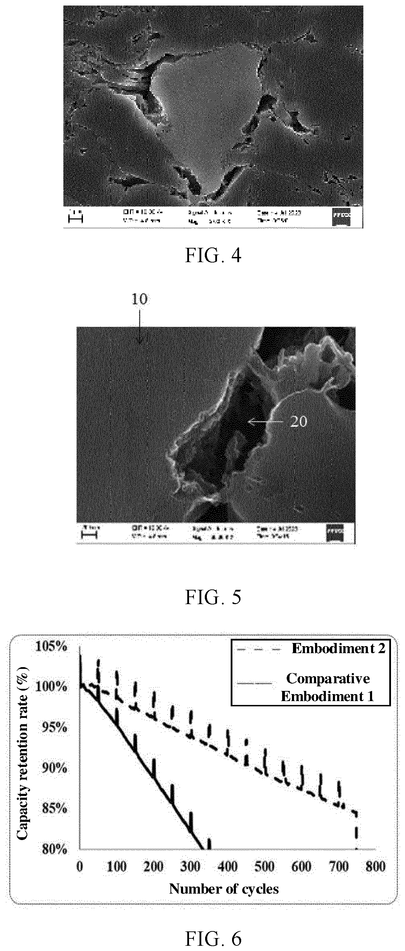

FIG. 4 is a SEM image of a cross-section of a negative electrode plate according to an embodiment of this application, and FIG. 5 is a magnified SEM image of FIG. 4. Referring to FIG. 5, the pore 10 of the silicon-based particle is a pore inside the silicon-based particle, and the pore 20 of the negative electrode plate is a pore between various particles in the negative electrode material layer.

**Embodiments**

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

Test methods and devices:

Method for testing the silicon content in a silicon-based particle:

Slicing a silicon-based particle, and measuring the mass percent of the element by use of EDS line scan, and averaging out the measured values.

Method for testing the porosity of the negative electrode plate:

Die-cutting 50 negative electrode plates by using the same die to obtain disc specimens that each possess a radius of d. Measuring the thickness h of each specimen with a high-precision micrometer. Putting the specimens into a specimen chamber of an AccuPyc 1340 instrument. Fill the specimens with helium (He) in the airtight specimen chamber to obtain a true volume V of the specimens based on the Bohr's law PV = nRT. Counting the number of discs after completion of the measurement, and calculating an apparent volume of the specimens as: apparent volume = $\pi$d$^2$ × 50 × h. Finally, obtaining the porosity $\alpha_2$ of the negative electrode plate by using the following formula: $\alpha_2$ = 1 - V/$\pi$d$^2$ × 50 × h.

Method for testing the porosity of the silicon-based particle:

Photographing the interface of a silicon-based particle by using a scanning transmission electron microscope (STEM), and determining the porosity by using the resultant STEM image. Specifically, binarizing the image threshold of the STEM image by using ImageJ software. Calibrating the unit of measurement with reference to a scale, and then measuring the area of pores by using the Analyze Particles command, so as to obtain an area ratio that is the porosity $\alpha_1$ of the silicon-based particle. Performing the foregoing measurement steps on 20 or more silicon-based particles selected randomly in the electrode plate, and averaging out the measured values.

Method for testing the specific surface area:

Measuring an amount of a gas adsorbed on a surface of a solid under different relative pressures in a constant low temperature environment (-199 °C to - 193 °C), and then determining a monolayer adsorbed gas quantity of a specimen based on the Brunauer-Emmett-Teller adsorption theory and the BET formula, so as to calculate the specific surface area of the solid:

$$\text{BET formula:} \frac{p}{w(P_0-\mathrm{p})} = \frac{1}{W_m\mathrm{C}} + (\mathrm{c}-1)/(W_m\mathrm{C}) \times P/P_0.$$

In the formula above, W is the mass of gas adsorbed by a solid specimen under a relative pressure ($P/P_0$), measured in cm$^3$/g.

$W_m$ is a saturated adsorption capacity of the gas that fully overlays an monolayer, measured in cm$^3$/g.

C is a constant related to adsorption heat and condensation heat of the first layer.

(c-1)/($W_m$C) is a slope, 1/$W_m$C is an intercept distance, and ($W_m$×N×$A_{cs}$/M) is a total specific surface area.

The specific surface area is S = St/m, where m is the mass of a specimen. $A_{cs}$ (adsorbate cross sectional area) is the average area occupied by each $N_2$ molecule, and is equal to 16.2 $Å^2$ for nitrogen.

Weighing out 1.5 to 3.5 grams of powder specimen, loading the specimen into a TriStar II 3020 specimen tube, degassing the specimen at 200 °C for 120 minutes, and then testing the specimen.

Method for testing the gram capacity of the negative electrode material layer:

Measuring the gram capacity of the negative electrode material layer of a button battery: Putting the assembled button battery in a constant-temperature environment of 25 °C, letting the battery stand for 5 minutes, and then discharging the battery at a current rate of 0.05 C until the voltage reaches 0.005 V. Letting the battery stand for 5 minutes, and discharging the battery at a current of 20 $\mu$A until the voltage reaches 0.005 V, so as to obtain a sum of discharge capacities in the foregoing two steps, denoted as $D_0$. Letting the battery stand for 5 minutes, and then charging the battery at a current rate of 0.1 C until the voltage reaches 2.0 V, and obtaining a charge capacity at this time, denoted as $C_0$. The first-cycle charge efficiency is $C_0/D_0 \times 100\%$.

Method for testing the compacted density of the negative electrode plate:

Die-cutting a negative electrode plate by use of a die-cutting machine to obtain small discs, with each disc covering an area of S. Weighing a disc to obtain a mass denoted as $M_1$. Measuring the thickness of the disc by use of a high-precision micrometer to obtain a thickness, denoted as $H_1$. Die-cutting a current collector into small discs by use of the same die-cutting machine, with each disc covering the same area S. Weighing a disc of the current collector to obtain a mass $M_2$, and measuring the thickness of the disc by use of a high-precision micrometer to obtain a thickness, denoted as $H_2$. Calculating the compacted density of the negative electrode as: compacted density = $(M_1 - M_2)/(H_1 - H_2)/S$.

Method for testing the particle size:

Adding approximately 0.02 gram of powder specimen into a 50 ml clean beaker, adding approximately 20 ml of deionized water, and then adding a few drops of 1% surfactant to fully disperse the powder in the water. Sonicating the solution in a 120 W ultrasonic cleaner for 5 minutes, and testing the particle size distribution by using a laser scattering particle size analyzer MasterSizer 2000.

$Dv_{50}$ represents a particle diameter of specimen particles obtained by use of a laser scattering particle size analyzer when the cumulative volume of the measured particles reaches 50% of the total volume of all specimen particles in a volume-based particle size distribution.

Method for testing a button battery containing a powder material:

Mixing the negative active material obtained in each embodiment, conductive carbon black, and modified polyacrylic acid (PAA) as a binder at a mass ratio of 80: 10: 10, adding the mixture into deionized water, and stirring the mixture to form a slurry. Coating a foil with the slurry by using a scraper until the thickness of the coating layer is 100 $\mu$m. Drying the foil in a vacuum-drier at approximately 85 °C for 12 hours. Cutting the foil into discs by use of a stamping press in a dry environment, with each disc being 1 cm in diameter. Using a metal lithium sheet as a counter electrode in a glovebox, using a Ceglard composite film as a separator, and adding an electrolytic solution to form a button battery. Performing a charge-and-discharge cycles on the battery by use of a LAND series battery test system to test the charge capacity and discharge capacity of the battery.

Discharging the battery at a current of 0.05 C until the voltage reaches 0.005 V, leaving the battery to stand for 5 minutes, and then discharging the battery at a current of 50 $\mu$A until the voltage reaches 0.005 V Leaving the battery to stand for 5 minutes, and then discharging the battery at a current of 10 $\mu$A until the voltage reaches 0.005 V, so as to obtain a first-cycle lithiation capacity of the material. Charging the battery at a current of 0.1 C until the voltage reaches 2 V, so as to obtain a first-cycle delithiation capacity. Finally, calculating a ratio of the first-cycle delithiation capacity to the first-cycle lithiation capacity to obtain the first-cycle Coulombic efficiency of the material.

Method for testing the cycle performance:

Charging the battery at a constant current of 0.7 C under a 25 °C or 45 °C temperature until the voltage reaches 4.4 V, charging the battery at a constant voltage until the current reaches 0.025 C, leaving the battery to stand for 5 minutes, and then discharging the battery at a current of 0.5 C until the voltage reaches 3.0 V. Using the capacity obtained in this step as an initial capacity. Testing the battery by charging the battery at 0.7 C and then discharging the battery at 0.5 C cyclically. Comparing the capacity at the end of each cycle with the initial capacity to obtain a plurality of ratios.

Plotting a capacity fading curve by using the ratios. Performing charge-and-discharge cycles on the lithium-ion battery at 25 °C until the capacity retention rate drops to 90%, and recording the number of cycles at this time as an indicator of the room-temperature cycle performance of the lithium-ion battery. Performing charge-and-discharge cycles at 45 °C until the capacity retention rate drops to 80%, and recording the number of cycles at this time as an indicator of the high-temperature cycle performance of the lithium-ion battery. Comparing the two numbers of cycles to obtain the cycle performance of the material.

Method for testing the discharge rate:

Discharging the battery at a C-rate of 0.2 C under a temperature of 25 °C until the voltage reaches 3.0 V, and leaving the battery to stand for 5 minutes. Charging the battery at 0.5 C until the voltage reaches 4.45 V, charging the battery at a constant voltage until the current reaches 0.05C, and leaving the battery to stand for 5 minutes. Adjusting the discharge rate and performing discharge tests at 0.2 C, 0.5 C, 1 C, 1.5 C, and 2.0 C respectively to obtain discharge capacities respectively. Calculating a ratio of the capacity of the battery discharged at each C-rate to the capacity of the battery cycled at 0.2 C, and obtaining the rate performance by comparing the ratio of the capacity of the battery discharged at 2 C and the capacity of the battery discharged at 0.2 C.

Method for testing a full-charge expansion rate of a lithium-ion battery:

Measuring an initial thickness of a half-charged fresh lithium-ion battery with a spiral micrometer. Measuring the thickness of the lithium-ion battery again with the spiral micrometer when the lithium-ion battery is in a fully charged state after being cycled for 400 cycles (cls). Comparing the measured thickness with the initial thickness of the half-charged fresh lithium-ion battery to obtain an expansion rate of the fully charged lithium-ion battery.

Method for calculating the energy density:

Charging the lithium-ion battery at 25 °C until the voltage reaches 4.45 V, and then measuring the length, width, and height of the lithium-ion battery by use of a laser thickness gauge to obtain the volume (V) of the lithium-ion battery. Discharging the battery at 0.2 C until the voltage reaches 3 V, so as to obtain a discharge capacity (C) and an average voltage platform (U) of the lithium-ion battery. Calculating the volumetric energy density (ED) as $ED = C \times U/V$

**Embodiment 1**

<Preparing a negative active material>

Putting a porous carbon material with a porosity of 41% into an airtight silicon-containing gas reactor. Heating the reactor to 500 °C, and keeping the temperature for 4 hours, and then cooling the carbon material. Sieving and demagnetizing the cooled material to obtain silicon-based particles with a porosity $\alpha_1$ equal to 30%. The carbon content of the silicon-based particle is 60 wt%, the silicon content B in the silicon-based particle is 40 wt%, the distance is 0.04 $\mu$m, and the average particle diameter $Dv_{50}$ of the silicon-based particles is 7.6 $\mu$m.

<Preparing a negative electrode plate>

Mixing the negative active material prepared above, graphite particles, and nano conductive carbon black at a mass ratio of 30: 66.5: 3.5 to obtain a first mixture. Mixing the first mixture with a binder PAA at a mass ratio of 95: 5, and adding the mixture into deionized water. Blending the mixture into a slurry with a solid content of 45%. Stirring well to obtain a first mixed slurry. Applying the first mixed slurry evenly onto one surface of an 8 $\square$m-thick copper foil used as a negative current collector. Drying the slurry at 120 °C in an air drying oven for 2 minutes to obtain a negative electrode plate coated with the negative active material in an amount of 7.5 mg/cm$^2$ on a single side. The above steps finish the coating on a single side of the negative electrode plate. Subsequently, repeating the above steps on the other surface of the negative electrode plate to obtain a negative electrode plate coated with a negative active material on both sides. Cold-pressing the electrode plate to obtain a negative electrode plate with a porosity $\alpha_2$ equal to 30%. Cutting the electrode plate into a size of 41 mm $\times$ 61 mm for future use.

<Preparing a positive electrode plate>

Mixing lithium cobalt oxide (LiCoO$_2$) as a positive active material, nano conductive carbon black, and polyvinylidene difluoride (PVDF) at a mass ratio of 97.5: 1.0: 1.5, adding N-methylpyrrolidone NMP as a solvent, blending the mixture into a slurry with a solid content of 75%, and stirring the slurry well. Coating one surface of a 10 $\mu$m-thick positive current collector aluminum foil with the slurry evenly, and drying the slurry at a temperature of 90 °C to obtain a positive electrode plate coated with a 110 $\mu$m-thick coating layer. The above steps finish the coating on a single side of the positive electrode plate. Subsequently, repeating the above steps on the other surface of the positive electrode plate to obtain a positive electrode plate coated with a positive active material on both sides. Cutting, after completion of the coating, the electrode plate into a size of 38 mm $\times$ 58 mm for future use.

<Preparing an electrolytic solution>

Mixing ethylene carbonate (EO), ethyl methyl carbonate, and diethyl carbonate at a mass ratio of EC: EMC: DEC = 30: 50: 20 in an dry argon atmosphere to form an organic solvent, and then adding a hexafluorophosphate lithium salt into the organic solvent to dissolve, and stirring the solution well to obtain an electrolytic solution in which the lithium salt concentration is 1.15 mol/L.

<Preparing a separator>

Mixing aluminum oxide and polyvinylidene difluoride at a mass ratio of 90: 10, and dissolving the mixture in deionized water to form a ceramic slurry with a solid content of 50%. Subsequently, coating one side of a porous substrate (polyethylene, thickness: 7 $\mu$m; average pore diameter: 0.073 $\mu$m; porosity: 26%) with the ceramic slurry evenly by a micro-gravure coating method. Drying the slurry to obtain a double-layer structure that includes a ceramic coating and a porous substrate. The thickness of the ceramic coating is 50 $\mu$m.

Mixing polyvinylidene difluoride (PVDF) and polyacrylate at a mass ratio of 96: 4, and dissolving the mixture in deionized water to form a polymer slurry with a solid content of 50%. Subsequently, coating both surfaces of the double-layer structure of the ceramic coating and the porous substrate with the polymer slurry evenly by a micro-gravure coating method, and drying the slurry to obtain a separator, in which the thickness of a single coating layer formed by the polymer slurry is 2 $\mu$m.

<Preparing a lithium-ion battery>

Stacking the prepared positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an aluminum plastic film package, drying the packaged electrode assembly, and then injecting the electrolytic solution. Performing steps such as vacuum sealing, static standing, chemical formation, degassing, and edge trimming to obtain a lithium-ion battery.

In Embodiment 2, Embodiment 3, Embodiment 4, Embodiment 5, Embodiment 6, Embodiment 7, Embodiment 8, Embodiment 9, Embodiment 10, Embodiment 11, Embodiment 12, Embodiment 13, Embodiment 14, Embodiment 15, Embodiment 16, Embodiment 17, Embodiment 18, Embodiment 19, Embodiment 20, and Embodiment 21, the steps of <Preparing a negative active material>, <Preparing a negative electrode plate>, <Preparing a positive electrode plate>, <Preparing an electrolytic solution>, <Preparing a separator>, and <Preparing a lithium-ion battery> are the same as those described in Embodiment 1, and the changes in the relevant preparation parameters are shown in Table 1.

**Table 1**

| Embodiment | Porosity $\alpha_1$ of silicon-based particle | Porosity $\alpha_2$ of negative electrode plate | Carbon content in silicon-based particle (wt%) | Silicon content B in silicon-based particle (wt%) | Distance ($\mu$m) | Average particle diameter $Dv_{50}$ of silicon-based particle ($\mu$m) |
|---|---|---|---|---|---|---|
| 1 | 30% | 30% | 60 | 40 | 0.04 | 7.6 |
| 2 | 30% | 30% | 60 | 40 | 0.08 | 7.6 |
| 3 | 30% | 30% | 60 | 40 | 0.15 | 7.6 |
| 4 | 30% | 30% | 60 | 40 | 0.2 | 7.6 |
| 5 | 16% | 30% | 60 | 40 | 0.08 | 7.6 |
| 6 | 25% | 30% | 60 | 40 | 0.08 | 7.6 |
| 7 | 38% | 30% | 60 | 40 | 0.08 | 7.6 |

(continued)

| Embodiment | Porosity $\alpha_1$ of silicon-based particle | Porosity $\alpha_2$ of negative electrode plate | Carbon content in silicon-based particle (wt%) | Silicon content B in silicon-based particle (wt%) | Distance ($\mu$m) | Average particle diameter $Dv_{50}$ of silicon-based particle ($\mu$m) |
|---|---|---|---|---|---|---|
| 8 | 47% | 30% | 60 | 40 | 0.08 | 7.6 |
| 9 | 56% | 30% | 60 | 40 | 0.08 | 7.6 |
| 10 | 38% | 30% | 80 | 20 | 0.08 | 7.6 |
| 11 | 38% | 30% | 20 | 60 | 0.08 | 7.6 |
| 12 | 30% | 15% | 65 | 35 | 0.08 | 7.6 |
| 13 | 30% | 18% | 65 | 35 | 0.08 | 7.6 |
| 14 | 30% | 27% | 65 | 35 | 0.08 | 7.6 |
| 15 | 30% | 35% | 65 | 35 | 0.08 | 7.6 |
| 16 | 30% | 42% | 65 | 35 | 0.08 | 7.6 |
| 17 | 15% | 27% | 65 | 35 | 0.08 | 7.6 |
| 18 | 18% | 27% | 65 | 35 | 0.08 | 7.6 |
| 19 | 33% | 27% | 65 | 35 | 0.08 | 7.6 |
| 20 | 45% | 27% | 65 | 35 | 0.08 | 7.6 |
| 21 | 60% | 27% | 65 | 35 | 0.08 | 7.6 |

**Embodiment 22**

<Preparing a negative active material>

1) Putting a porous carbon material with a porosity of 41% into an airtight silicon-containing gas reactor. Heating the reactor to 500 °C, and keeping the temperature for 4 hours, and then cooling the carbon material. Sieving and demagnetizing the cooled material to obtain silicon-based particles with a porosity $\alpha_1$ equal to 30%. The carbon content in the silicon-based particle is 60 wt%, and the silicon content B in the silicon-based particle is 40 wt%. The distance is 0.08 $\mu$m, and the average particle diameter $Dv_{50}$ of the silicon-based particles is 7.6 $\mu$m.

2) Adding the silicon-based particles obtained in step 1) into single-walled carbon nanotubes (SCNT) that contains a sodium carboxymethylcellulose (CMC-Na) dispersant to disperse for 2 hours until a uniform mixed solution is formed. Spray-drying the mixed solution to obtain powder. Pulverizing the powder, and sieving the power through a 400-mesh sieve to obtain a negative electrode material, in which the mass ratio between the silicon-based particle and the SCNT and the sodium carboxymethyl cellulose is 99.75: 0.1: 0.15.

The steps of <Preparing a negative electrode plate>, <Preparing a positive electrode plate>, <Preparing an electrolytic solution>, <Preparing a separator>, and <Preparing a lithium-ion battery> are the same as those described in Embodiment 1.

In Embodiment 23, Embodiment 24, Embodiment 25, Embodiment 26, Embodiment 27, Embodiment 28, Embodiment 29, Embodiment 30, Embodiment 31, Embodiment 32, Embodiment 33, Embodiment 34, Embodiment 35, Embodiment 36, and Embodiment 37, the steps of <Preparing a negative active material>, <Preparing a negative electrode plate>, <Preparing a positive electrode plate>, <Preparing an electrolytic solution>, <Preparing a separator>, and <Preparing a lithium-ion battery> are the same as those described in Embodiment 22, and the changes in the relevant preparation parameters are shown in Table 2.

**Table 2**

| Embodiment | Porosity $\alpha_1$ of silicon-based particle | Porosity $\alpha_2$ of negative electrode plate | Carbon content in silicon-based particle (wt%) | Silicon content B in silicon-based particle (wt%) | Type of carbon material | Type of dispersant | Mass ratio between silicon-based particle and carbon material and dispersant |
|---|---|---|---|---|---|---|---|
| 22 | 30% | 30% | 64 | 36 | SCNT | CMC-Na | 99.75: 0.1: 0.15 |
| 23 | 30% | 30% | 64 | 36 | Multi-walled carbon nanotubes (MCNT) | CMC-Na | 99.75: 0.1: 0.15 |
| 24 | 30% | 30% | 64 | 36 | SCNT: MCNT = 1: 1 | CMC-Na | 99.75: 0.1: 0.15 |
| 25 | 30% | 30% | 64 | 36 | / | CMC-Na | 99.85: 0.0: 0.15 |
| 26 | 30% | 30% | 64 | 36 | SCNT | CMC-Na | 99.84: 0.01: 0.15 |
| 27 | 30% | 30% | 64 | 36 | SCNT | CMC-Na | 99.35: 0.5: 0.15 |
| 28 | 30% | 30% | 64 | 36 | SCNT | CMC-Na | 98.85: 1.0: 0.15 |
| 29 | 30% | 30% | 64 | 36 | SCNT | Polyvinylpyrrolidone (PVP) | 99.75: 0.1: 0.15 |
| 30 | 30% | 30% | 64 | 36 | SCNT | Polyvinylidene difluoride (PVDF) | 99.75: 0.1: 0.15 |
| 31 | 30% | 30% | 64 | 36 | SCNT | Polyacrylic acid sodium (PAAS) | 99.75: 0.1: 0.15 |
| 32 | 30% | 30% | 64 | 36 | SCNT | / | 99.9: 0.1: 0.0 |
| 33 | 30% | 30% | 64 | 36 | SCNT | CMC-Na | 99.5: 0.1: 0.4 |
| 34 | 30% | 30% | 64 | 36 | SCNT | CMC-Na | 99.875: 0.1: 0.025 |
| 35 | 30% | 30% | 64 | 36 | Amorphous carbon | / | 99.9: 0.1: 0.0 |
| 36 | 30% | 30% | 64 | 36 | Vapor grown carbon fibers | / | 99.9: 0.1: 0.0 |
| 37 | 30% | 30% | 64 | 36 | Graphene | / | 99.9: 0.1: 0.0 |
| Note: "/" in Table 2 indicates nonexistence of the corresponding preparation parameter. | | | | | | | |

The steps of <Preparing a negative active material>, <Preparing a negative electrode plate>, <Preparing a positive electrode plate>, <Preparing an electrolytic solution>, <Preparing a separator>, and <Preparing a lithium-ion battery> in Comparative Embodiment 1, Comparative Embodiment 2, Comparative Embodiment 3, Comparative Embodiment 4, Comparative Embodiment 5, Comparative Embodiment 7, Comparative Embodiment 7, and Comparative Embodiment 8 are the same as those described in Embodiment 1, and the changes in the relevant preparation parameters are shown in Table 3.

Table 3

| Comparative Embodiment | Porosity $\alpha_1$ of silicon-based particle | Porosity $\alpha_2$ of negative electrode plate | Carbon content in silicon-based particle (wt%) | Silicon content B in silicon-based particle (wt%) | Distance ($\mu$m) | Average particle diameter $Dv_{50}$ of silicon-based particle ($\mu$m) |
|---|---|---|---|---|---|---|
| 1 | 30% | 30% | 60 | 40 | 0 | 7.6 |
| 2 | 30% | 30% | 60 | 40 | 0.4 | 7.6 |
| 3 | 8% | 30% | 60 | 40 | 0.08 | 7.6 |
| 4 | 62% | 30% | 60 | 40 | 0.08 | 7.6 |
| 5 | 30% | 10% | 65 | 35 | 0.08 | 7.6 |
| 6 | 30% | 62% | 65 | 35 | 0.08 | 7.6 |
| 7 | 5% | 27% | 65 | 35 | 0.08 | 7.6 |
| 8 | 67% | 27% | 65 | 35 | 0.08 | 7.6 |

The preparation parameters of Embodiments 1, 2, 3, and 4 and Comparative Embodiments 1 and 2 are shown in Table 4.

Table 4

| | Distance ($\mu$m) | $Dv_{50}$ ($\mu$m) | Gram capacity (mAh/g) | First-cycle Coulombic efficiency | Specific surface area (g/cm$^3$) |
|---|---|---|---|---|---|
| Embodiment 1 | 0.04 | 7.6 | 1613.7 | 89.4% | 8.7 |
| Embodiment 2 | 0.08 | 7.6 | 1567.6 | 87.1% | 11.3 |
| Embodiment 3 | 0.15 | 7.6 | 1345.8 | 86.5% | 14.1 |
| Embodiment 4 | 0.2 | 7.6 | 1109.4 | 84.6% | 17.8 |
| Comparative Embodiment 1 | 0 | 7.6 | 1808.4 | 90.3% | 6.4 |
| Comparative Embodiment 2 | 0.4 | 7.6 | 993.7 | 82.1% | 25.4 |

The test results of Embodiments 1, 2, 3, and 4 and Comparative Embodiments 1 and 2 are shown in Table 5.

Table 5

| | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Volumetric energy density (Wh/L) |
|---|---|---|---|---|---|
| Embodiment 1 | 89.9% | 88.6% | 8.4% | 8.5% | 793 |
| Embodiment 2 | 92.8% | 92.5% | 6.1% | 6.2% | 815 |

(continued)

|  | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Volumetric energy density (Wh/L) |
|---|---|---|---|---|---|
| Embodiment 3 | 90.8% | 90.1% | 6.9% | 8.1% | 790 |
| Embodiment 4 | 87.8% | 87.1% | 7.5% | 8.1% | 780 |
| Comparative Embodiment 1 | 83.2% | 84.1% | 10.3% | 10.8% | 763 |
| Comparative Embodiment 2 | 79.3% | 78.6% | 10.9% | 10.4% | 745 |

The preparation parameters of Embodiments 5, 6, 7, 8, 9, 10, and 11 and Comparative Embodiments 3 and 4 are shown in Table 6.

**Table 6**

|  | P value | Porosity $\alpha_1$ of silicon-based particle | Silicon content B in silicon-based particle (wt%) | BET specific surface area $(m^2/g)$ | Distance $(\mu m)$ |
|---|---|---|---|---|---|
| Embodiment 5 | 0.2 | 16% | 40 | 5.1 | 0.08 |
| Embodiment 6 | 0.4 | 25% | 40 | 6.5 | 0.08 |
| Embodiment 7 | 0.8 | 38% | 40 | 10.3 | 0.08 |
| Embodiment 8 | 1.1 | 47% | 40 | 20.4 | 0.08 |
| Embodiment 9 | 1.6 | 56% | 40 | 26.9 | 0.08 |
| Embodiment 10 | 1.5 | 38% | 20 | 9.8 | 0.08 |
| Embodiment 11 | 0.5 | 38% | 60 | 5.4 | 0.08 |
| Comparative Embodiment 3 | 0.1 | 8% | 40 | 3.2 | 0.08 |
| Comparative Embodiment 4 | 2.2 | 62% | 40 | 47.7 | 0.08 |

The test results Embodiments 5, 6, 7, 8, 9, 10, and 11 and Comparative Embodiments 3 and 4 are shown in Table 7.

**Table 7**

|  | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Volumetric energy density (Wh/L) |
|---|---|---|---|---|---|
| Embodiment 5 | 85.2% | 84.6% | 9.4% | 9.3% | 786 |
| Embodiment 6 | 88.7% | 86.6% | 8.4% | 8.3% | 792 |

(continued)

| | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Volumetric energy density (Wh/L) |
|---|---|---|---|---|---|
| Embodiment 7 | 93.1% | 92.6% | 6.1% | 7.2% | 819 |
| Embodiment 8 | 91.3% | 89.6% | 6.3% | 7.0% | 782 |
| Embodiment 9 | 89.2% | 88.7% | 6.8% | 7.5% | 772 |
| Embodiment 10 | 90.6% | 89.5% | 6.5% | 7.2% | 762 |
| Embodiment 11 | 86.2% | 85.6% | 9.9% | 10.5% | 788 |
| Comparative Embodiment 3 | 76.4% | 74.6% | 14.6% | 14.8% | 770 |
| Comparative Embodiment 4 | 81.7% | 78.3% | 12.3% | 13.0% | 750 |

The preparation parameters of Embodiments 12, 13, 14, 15, 16, 17, 18, 19, 20, and 21 and Comparative Embodiments 5, 6, 7, and 8 are shown in Table 8.

**Table 8**

| | Porosity $\alpha_1$ of silicon-based particle | Porosity $\alpha_2$ of negative electrode plate | Silicon content B in silicon-based particle (wt%) | Gram capacity of negative electrode of full battery (mAh/g) | Compacted density of electrode plate (g/cm$^3$) |
|---|---|---|---|---|---|
| Embodiment 12 | 30% | 15% | 35 | 500 | 1.78 |
| Embodiment 13 | 30% | 18% | 35 | 500 | 1.76 |
| Embodiment 14 | 30% | 27% | 35 | 500 | 1.65 |
| Embodiment 15 | 30% | 35% | 35 | 500 | 1.63 |
| Embodiment 16 | 30% | 42% | 35 | 500 | 1.60 |
| Embodiment 17 | 15% | 27% | 35 | 500 | 1.58 |
| Embodiment 18 | 18% | 27% | 35 | 500 | 1.70 |
| Embodiment 19 | 33% | 27% | 35 | 500 | 1.70 |
| Embodiment 20 | 45% | 27% | 35 | 500 | 1.70 |

(continued)

| | Porosity $\alpha_1$ of silicon-based particle | Porosity $\alpha_2$ of negative electrode plate | Silicon content B in silicon-based particle (wt%) | Gram capacity of negative electrode of full battery (mAh/g) | Compacted density of electrode plate (g/cm$^3$) |
|---|---|---|---|---|---|
| Embodiment 21 | 60% | 27% | 35 | 500 | 1.70 |
| Comparative Embodiment 5 | 30% | 10% | 35 | 500 | 1.84 |
| Comparative Embodiment 6 | 30% | 62% | 35 | 500 | 1.42 |
| Comparative Embodiment 7 | 5% | 27% | 35 | 500 | 1.70 |
| Comparative Embodiment 8 | 67% | 27% | 35 | 500 | 1.70 |

The test results of Embodiments 12, 13, 14, 15, 16, 17, 18, 19, 20, and 21 and Comparative Embodiments 5, 6, 7, and 8 are shown in Table 9.

**Table 9**

| | 400$^{th}$-cycle capacity retention rate cycled at 25 °C | 200$^{th}$-cycle capacity retention rate cycled at 45 °C | 400$^{th}$-cycle deformation rate cycled at 25 °C | 200$^{th}$-cycle deformation rate cycled at 45 °C | Volumetric energy density (Wh/L) |
|---|---|---|---|---|---|
| Embodiment 12 | 86.1% | 85.3% | 9.6% | 9.5% | 784 |
| Embodiment 13 | 89.2% | 87.1% | 8.2% | 8.1% | 793 |
| Embodiment 14 | 92.8% | 92.1% | 6.3% | 6.8% | 816 |
| Embodiment 15 | 91.8% | 91.5% | 6.5% | 6.7% | 798 |
| Embodiment 16 | 89.8% | 89.3% | 6.7% | 7.1% | 783 |
| Embodiment 17 | 88.2% | 85.3% | 9.5% | 10.1% | 790 |
| Embodiment 18 | 89.2% | 87.1% | 8.2% | 8.1% | 793 |
| Embodiment 19 | 92.2% | 92.0% | 6.3% | 6.8% | 816 |
| Embodiment 20 | 91.8% | 90.3% | 6.5% | 7.1% | 780 |
| Embodiment 21 | 92.0% | 91.1% | 6.3% | 6.5% | 763 |

(continued)

|  | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Volumetric energy density (Wh/L) |
|---|---|---|---|---|---|
| Comparative Embodiment 5 | 76.2% | 77.1% | 12.3% | 12.8% | 775 |
| Comparative Embodiment 6 | 78.3% | 74.6% | 11.9% | 12.4% | 743 |
| Comparative Embodiment 7 | 76.2% | 77.1% | 12.3% | 12.8% | 755 |
| Comparative Embodiment 8 | 78.3% | 74.6% | 11.9% | 12.4% | 743 |

The preparation parameters of Embodiments 2, 22, 23, 24, 25, 26, 27, 28, 29, 30, 31, 32, 33, 34, 35, 36, and 37 are shown in Table 10.

**Table 10**

|  | Type of carbon material | Content of carbon material | Type of dispersant | Content of dispersant |
|---|---|---|---|---|
| Embodiment 2 | / | / | / | / |
| Embodiment 22 | SCNT | 0.10% | CMC-Na | 0.15% |
| Embodiment 23 | MCNT | 0.10% | CMC-Na | 0.15% |
| Embodiment 24 | SCNT: MCNT = 1: 1 | 0.10% | CMC-Na | 0.15% |
| Embodiment 25 | SCNT | 0.00% | CMC-Na | 0.15% |
| Embodiment 26 | SCNT | 0.01% | CMC-Na | 0.15% |
| Embodiment 27 | SCNT | 0.50% | CMC-Na | 0.15% |
| Embodiment 28 | SCNT | 1.00% | CMC-Na | 0.15% |
| Embodiment 29 | SCNT | 0.10% | PVP | 0.15% |
| Embodiment 30 | SCNT | 0.10% | PVDF | 0.15% |
| Embodiment 31 | SCNT | 0.10% | PAANa | 0.15% |
| Embodiment 32 | SCNT | 0.10% | 0 | 0 |
| Embodiment 33 | SCNT | 0.10% | CMC-Na | 0.4% |

(continued)

|  | Type of carbon material | Content of carbon material | Type of dispersant | Content of dispersant |
|---|---|---|---|---|
| Embodiment 34 | SCNT | 0.10% | CMC-Na | 0.025% |
| Embodiment 35 | Amorphous carbon | 0.10% | 0 | 0 |
| Embodiment 36 | Vapor grown carbon fibers | 0.10% | 0 | 0 |
| Embodiment 37 | Graphene | 0.10% | 0 | 0 |

The test results of Embodiments 2, 22, 23, 24, 25, 26, 27, 28, 29, 30, 31, 32, 33, 34, 35, 36, and 37 are shown in Table 11.

**Table 11**

|  | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Rate performance (2 C) |
|---|---|---|---|---|---|
| Embodiment 2 | 92.7% | 91.6% | 6.4% | 7.2% | 87.7% |
| Embodiment 22 | 94.6% | 92.4% | 6.3% | 7.5% | 87.6% |
| Embodiment 23 | 93.2% | 90.4% | 6.4% | 7.5% | 87.6% |
| Embodiment 24 | 93.7% | 90.8% | 6.4% | 7.8% | 87.3% |
| Embodiment 25 | 91.7% | 88.4% | 6.7% | 8.3% | 84.6% |
| Embodiment 26 | 94.6% | 92.4% | 6.3% | 7.5% | 87.6% |
| Embodiment 27 | 94.4% | 92.0% | 6.7% | 7.8% | 88.6% |
| Embodiment 28 | Not processible | | | | |
| Embodiment 29 | 92.7% | 89.7% | 7.7% | 8.9% | 84.1% |
| Embodiment 30 | 92.9% | 90.1% | 7.2% | 8.4% | 84.6% |
| Embodiment 31 | 93.3% | 90.9% | 7.0% | 7.8% | 85.6% |
| Embodiment 32 | 90.7% | 86.4% | 8.6% | 9.4% | 85.4% |
| Embodiment 33 | 93.3% | 90.5% | 7.8% | 8.7% | 81.1% |
| Embodiment 34 | 93.2% | 90.2% | 6.6% | 7.7% | 87.6% |

(continued)

|  | 400th-cycle capacity retention rate cycled at 25 °C | 200th-cycle capacity retention rate cycled at 45 °C | 400th-cycle deformation rate cycled at 25 °C | 200th-cycle deformation rate cycled at 45 °C | Rate performance (2 C) |
|---|---|---|---|---|---|
| Embodiment 35 | 92.5% | 92.4% | 6.5% | 7.0% | 87.6% |
| Embodiment 36 | 93.0% | 92.5% | 6.4% | 7.0% | 88.2% |
| Embodiment 37 | 92.4% | 92.0% | 6.4% | 7.1% | 87.9% |

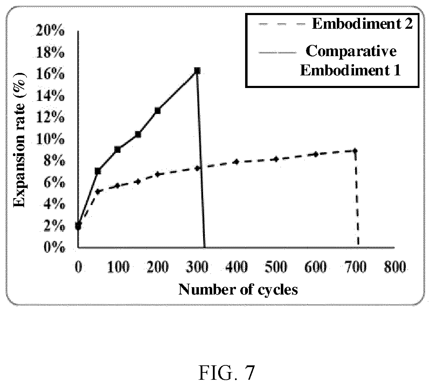

As can be seen from Embodiments 1, 2, 3, and 4 Comparative Embodiments 1 and 2, for the silicon-based particles of the same $Dv_{50}$, when the Si content in the superficial region is less than the Si content in the inner region, the cycle performance and anti-expansion performance of the lithium-ion batteries can be improved significantly. However, when the superficial region with a low Si content becomes larger, the cycle performance, anti-expansion performance, and energy density of the lithium-ion batteries are deteriorated. That is because, when the Si content of the carbonaceous material is relatively low, some pores are not filled, and the specific surface area increases, thereby increasing the contact area between the silicon-based particle and the electrolytic solution, producing a large number of by-products, consuming limited lithium ions, causing capacity attenuation, and increasing expansion. In addition, the gram capacity of the negative electrode material layer is further reduced, thereby decreasing the energy density of the lithium-ion batteries significantly. FIG. 6 shows a capacity attenuation curve during cycling according to Embodiment 2 and Comparative Embodiment 1, and FIG. 7 shows an expansion curve of Embodiment 2 and Comparative Embodiment 1.

As can be seen from Embodiments 5, 6, 7, 8, and 9 and Comparative Embodiments 3 and 4, when the silicon content B is constant, no significant difference in the gram capacity of the negative electrode material layer is exhibited. With the increase of the porosity of the silicon-based particle, the specific surface area of the silicon-based particle increases gradually.

As can be seen from Embodiments 7, 10, and 11, the change of the silicon content B in the silicon-based particle leads to the change of the P value, and affects the gram capacity of the negative electrode material layer and the specific surface area of the silicon-based particle.

As can be seen from Embodiments 5, 6, 7, 8, 9, 10, and 11 and Comparative Embodiments 3 and 4, when the P value is deficient, the reserved pores in the silicon-based particle are not enough to cushion the volume expansion caused by lithiation of nano-silicon, and the mechanical strength of the carbonaceous material can hardly withstand the huge expansion stress, thereby disrupting the structure of the silicon-based particle and deteriorating the electrochemical performance of the lithium-ion battery. When the P value is excessive, the reserved pores in the silicon-based particle are oversized, thereby deteriorating the mechanical compressive strength of the carbonaceous material, making the silicon-based particle prone to break during processing, exposing plenty of fresh interfaces, deteriorating the first-cycle Coulombic efficiency and cycle performance of the lithium-ion battery, and reducing the overall energy density of the lithium-ion battery. When the P value falls within the range specified herein, the cycle performance, anti-expansion performance, and volumetric energy density of the lithium-ion batteries can be enhanced effectively. In this case, the silicon-based particle includes a space to allow for expansion caused by silicon lithiation, and is also structurally stable and processible.

As can be seen from Embodiments 12, 13, 14, 15, and 16 and Comparative Embodiments 5 and 6, when the porosity of the silicon-based particle is constant, if the porosity of the negative electrode plate is deficient, the cycle performance and anti-expansion performance of the lithium-ion batteries deteriorate drastically. That is because the pores inside the silicon-based particle are not enough for completely relieving the volume expansion caused by silicon lithiation, and the expansion caused by silicon lithiation needs to be further relieved by the pores of the negative electrode plate. In addition, the volume expansion makes it difficult for the electrolytic solution to fully infiltrate the electrode plate, thereby increasing the transmission distance of lithium ions, and deteriorating the kinetics of the lithium-ion batteries. When the porosity of the negative electrode plate is excessive, the gap between particles of the negative electrode material layer is too large, and the contact area between the particles is reduced, thereby reducing the intercalation sites of lithium ions. In addition, this makes the lithium-ion battery prone to debonding during cycling, and results drastic deterioration of the cycle performance, anti-expansion performance, and kinetics of the lithium-ion batteries. Moreover, the compacted density of the negative electrode plate is reduced, and the volumetric energy density of the lithium-ion batteries is also reduced significantly.

As can be seen from Embodiments 17, 18, 19, 20, and 21 and Comparative Embodiments 7 and 8, when the porosity of the negative electrode plate is constant, if the porosity of the silicon-based particle is deficient, the cycle performance and anti-expansion performance of the lithium-ion batteries deteriorate drastically. That is because the space reserved inside the silicon-based particle is not enough to cushion the volume expansion caused by nano-silicon lithiation. In this case, the mechanical strength of the carbonaceous material can hardly withstand the huge expansion stress, and the structure of the silicon-based particle is prone to break down during cycling. When the porosity of the silicon-based particle is excessive, the compressive strength of the carbonaceous material decreases, and the silicon-based particle becomes prone to break down during processing, thereby deteriorating the electrical performance. In addition, with the decrease in the compacted density of the electrode plate, the volumetric energy density of the lithium-ion batteries also decreases accordingly.

As can be seen from Embodiments 12, 13, 14, 15, 16, 17, 18, 19, 20, and 21, when the porosity of the negative electrode plate in the lithium-ion batteries is set reasonably in conjunction with the porosity of the silicon-based particle, the reasonable setting can more effectively improve the cycle performance and anti-expansion performance of the lithium-ion batteries, and increase the volumetric energy density of the lithium-ion batteries.

As can be seen from Embodiments 22, 23, 24, 25, 26, 27, 28, 29, 30, 31, 32, 33, 34, 35, 36, and Embodiment 37 versus Embodiment 2, the 0.1 wt% SCNT added in the surface of the silicon-based particle can significantly enhance the cycle performance of the lithium-ion batteries, the 0.1 wt% MCNT added enhances the cycle performance slightly, and the 0.05 wt% SCNT and 0.05 wt% MCNT added together enhance the cycle performance to some extent. In Embodiments 22, 25, 26, 27, and 28, the dosage of SCNT is changed. Controlling the dosage of SCNT to be less than or equal to 0.5% can effectively enhance the cycle performance. However, when the dosage of SCNT reaches 0.5 wt%, the improvement of the cycle performance is not significant in contrast to the dosage of 0.1 wt%, but the first-cycle Coulombic efficiency is deteriorated. When the dosage of SCNT reaches 1 wt%, the excess SCNT makes the slurry non-processible. In Embodiments 22, 29, 30, and 31 vary in the dispersant. When no dispersant is added, SCNT is ineffective due to failure to disperse, and the cycle performance and deformation of the lithium-ion batteries deteriorate. When PVP and PVDF are used as dispersants, the cycle performance is slightly deteriorated in contrast to the CMC-Na and PAANa. Embodiments 22, 32, 33, and 34 vary in the dosage of the dispersant. When the dosage of the dispersant is 0.4 wt%, the dispersion effect is enhanced, but the excess dispersant deteriorates the rate performance. When the dosage of the dispersant is 0.025 wt%, the dispersion effect is poor, and the cycle performance and rate performance are deteriorated in contrast to the dispersant added at a mass percent of 0.15 wt%. In Embodiments 32, 35, 36, and 37 vary in the carbon material coating. As can be seen from the test results, the coating effect of CNT and graphene is the best. That is because the CNT or graphene coating not only increases the electronic conductivity of the material, but also increases the contact sites between material particles, and reduces the cycle attenuation caused by contact failure.

To sum up, in the silicon-based particle of a diameter larger than 3 $\mu$m in the negative electrode plate according to this application, the Si content in the superficial region is lower than the Si content in the inner region. In this way, the stress concentration on the surface of the negative electrode plate is reduced, thereby improving the stability of the interface between the silicon-based particle and the electrolytic solution, and in turn, significantly improving the cycle performance of the electrochemical device and alleviating the problem of expansion and deformation.

What is described above is merely exemplary embodiments of this application, but is not intended to limit this application. Any modifications, equivalent replacements, improvements, and the like made without departing from the spirit and principles of this application still fall within the protection scope of this application.

**Claims**

1. A negative electrode plate, wherein the negative electrode plate comprises a negative electrode material layer, the negative electrode material layer comprises a silicon-based particle and a graphite particle, and the silicon-based particle comprises silicon and carbon, wherein
   in a silicon-based particle of a diameter larger than 3 $\mu$m, a Si content in a superficial region is lower than a Si content in an inner region.

2. The negative electrode plate according to claim 1, wherein, in a superficial region extending a distance from an outer surface of the silicon-based particle to a point that is less than 0.2 $\mu$m distant from the outer surface, a mass percent of Si is $M_1$;

   in an inner region that is more than 0.2 $\mu$m distant from the outer surface of the silicon-based particle, the mass percent of Si is $M_2$; and
   $M_2$ is greater than $M_1$.

3. The negative electrode plate according to claim 1, wherein a sum $\alpha$ of a porosity $\alpha_1$ of the silicon-based particle and a porosity $\alpha_2$ of the negative electrode plate satisfies: $40\% < \alpha < 90\%$.

4. The negative electrode plate according to claim 3, wherein the porosity $\alpha_1$ of the silicon-based particle is 15% to 60%, and the porosity $\alpha_2$ of the negative electrode plate is 15% to 42%.

5. The negative electrode plate according to claim 4, wherein the porosity $\alpha_1$ of the silicon-based particle and a silicon content B in the silicon-based particle satisfy: $P = 0.5\alpha_2/(B - \alpha_2 B)$, $0.2 \leq P \leq 1.6$, wherein the silicon content B in the silicon-based particle is 20 wt% to 60 wt%.

6. The negative electrode plate according to claim 1, wherein a content of the silicon-based particle in the negative electrode material layer is 3 wt% to 80 wt%.

7. The negative electrode plate according to claim 1, wherein a peak intensity ratio between a D peak and a G peak in a Raman test of the silicon-based particle is 0.2 to 2; and
the D peak is a peak with a shift range of 1255 $cm^{-1}$ to 1355 $cm^{-1}$ in a Raman spectrum of the silicon-based particle, and the G peak is a peak with a shift range of 1575 $cm^{-1}$ to 1600 $cm^{-1}$ in the Raman spectrum of the silicon-based particle.

8. The negative electrode plate according to claim 1, wherein a carbon material exists on a surface of the silicon-based particle, and the carbon material comprises at least one of amorphous carbon, carbon nanotubes, carbon nanoparticles, vapor grown carbon fibers, or graphene.

9. The negative electrode plate according to claim 1, wherein an average particle diameter $Dv_{50}$ of the silicon-based particles is less than 20 $\mu m$.

10. The negative electrode plate according to claim 1, wherein a specific surface area of the silicon-based particle is less than 50 $m^2/g$.

11. An electrochemical device, comprising the negative electrode plate according to any one of claims 1 to 10.

12. An electronic device, comprising the electrochemical device according to claim 11.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2020/140374** |

| | |
|---|---|
| **A.** | **CLASSIFICATION OF SUBJECT MATTER** |

H01M 4/134(2010.01)i

According to International Patent Classification (IPC) or to both national classification and IPC

| | |
|---|---|
| **B.** | **FIELDS SEARCHED** |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 负极, 阳极, 电极, 硅, 碳, 石墨, 拉曼, 粒径, 比表面积, 含量, 浓度, 梯度, 渐变, 减少, 梯度, 降低, batter+, cell?, negative, electrode?, anode?, silicon, carbon, graphite, raman, diameter, specific surface area, content, concentration, gradient, gradual, decreas+, reduc+

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | CN 107069009 A (GUANGDONG ZHUGUANG NEW ENERGY TECHNOLOGY CO., LTD.) 18 August 2017 (2017-08-18) description paragraphs 8-35, 76 | 1-4, 6-12 |
| Y | CN 109715556 A (DYNATEC ENGINEERING AS) 03 May 2019 (2019-05-03) description, paragraphs 10-45 | 1-4, 6-12 |
| Y | CN 107204431 A (BYD COMPANY LTD.) 26 September 2017 (2017-09-26) description, paragraphs 7-12 | 1-4, 6-12 |
| Y | CN 110867560 A (NINGDE CONTEMPORARY AMPEREX TECHNOLOGY CO., LTD.) 06 March 2020 (2020-03-06) description, paragraphs 9-23 | 3, 4, 9-12 |
| Y | CN 105981203 A (SHIN-ETSU CHEMICAL CO., LTD.) 28 September 2016 (2016-09-28) description paragraphs 98-140 | 7, 11, 12 |
| A | CN 106450246 A (JIANGXI ZHENG TUO ENERGY TECHNOLOGY POLYTRON CO., LTD.) 22 February 2017 (2017-02-22) entire document | 1-12 |

| ☑ Further documents are listed in the continuation of Box C. | ☑ See patent family annex. |
|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 September 2021** | **28 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

<table>
<tr><td colspan="2">International application No.</td></tr>
<tr><td colspan="2"><strong>PCT/CN2020/140374</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | US 2016006024 A1 (GM GLOBAL TECHNOLOGY OPERATIONS LLC.) 07 January 2016 (2016-01-07)<br>    entire document | 1-12 |

**INTERNATIONAL SEARCH REPORT**
Information on patent family members

International application No.

**PCT/CN2020/140374**

| Patent document cited in search report | | | Publication date (day/month/year) | Patent family member(s) | | | Publication date (day/month/year) |
|---|---|---|---|---|---|---|---|
| CN | 107069009 | A | 18 August 2017 | CN | 107069009 | B | 11 February 2020 |
| CN | 109715556 | A | 03 May 2019 | NO | 20161490 | A1 | 20 March 2018 |
| | | | | KR | 20190049772 | A | 09 May 2019 |
| | | | | JP | 2019530147 | A | 17 October 2019 |
| | | | | EP | 3515863 | A1 | 31 July 2019 |
| | | | | WO | 2018052318 | A1 | 22 March 2018 |
| | | | | EP | 3515863 | A4 | 08 April 2020 |
| | | | | US | 2019263666 | A1 | 29 August 2019 |
| | | | | NO | 343898 | B1 | 01 July 2019 |
| CN | 107204431 | A | 26 September 2017 | CN | 107204431 | B | 21 February 2020 |
| CN | 110867560 | A | 06 March 2020 | CN | 110867560 | B | 02 April 2021 |
| | | | | EP | 3806196 | A1 | 14 April 2021 |
| | | | | US | 2021111410 | A1 | 15 April 2021 |
| | | | | WO | 2020042571 | A1 | 05 March 2020 |
| CN | 105981203 | A | 28 September 2016 | CN | 105981203 | B | 28 May 2019 |
| | | | | EP | 3104439 | B1 | 03 July 2019 |
| | | | | KR | 20160118258 | A | 11 October 2016 |
| | | | | WO | 2015118846 | A1 | 13 August 2015 |
| | | | | EP | 3104439 | A1 | 14 December 2016 |
| | | | | US | 10199678 | B2 | 05 February 2019 |
| | | | | JP | 6359836 | B2 | 18 July 2018 |
| | | | | EP | 3104439 | A4 | 09 August 2017 |
| | | | | JP | 2015149224 | A | 20 August 2015 |
| | | | | US | 2016351947 | A1 | 01 December 2016 |
| CN | 106450246 | A | 22 February 2017 | None | | | |
| US | 2016006024 | A1 | 07 January 2016 | US | 9859554 | B2 | 02 January 2018 |

Form PCT/ISA/210 (patent family annex) (January 2015)